# EUROPÄISCHE PATENTANMELDUNG

(11) **EP 1 645 550 A1**
(43) Veröffentlichungstag der Anmeldung: **12.04.2006**
(21) Anmeldenummer: 05014912.9
(22) Anmeldetag: 09.07.2005
(51) Int. Cl.: C03C 17/36, C03C 17/38, F24C 15/02

(54) **Dekorblende mit metallischer Anmutung**

(30) Priorität: 18.08.2004 DE 102004040043
(71) Anmelder: Schott AG, 55122 Mainz (DE)
(72) Erfinder: Zago, Giuseppe, 55022 Bagni di Lucca (IT); von Torklus, Georg, 55118 Mainz (DE)
(74) Vertreter: Fuchs Mehler Weiss & Fritzsche

(57) **Zusammenfassung**

Dekorblenden der vorgenannten Art finden typischerweise im Haushaltsbereich Anwendung, insbesondere als Bedienblende für Haushaltsgeräte oder als Rahmen für Sichtfenster von Haushaltsgeräten. Bislang wurde die metallische Anmutung der Blende durch Metallfolien oder -bleche erzielt, die auf dem jeweiligen Träger aufgeklebt wurden, oder indem der Träger eine Dekorfunktions-Schicht sowie eine metallische Schicht aufweist.

Um bei letzterer Methode eine frontseitig glatte Oberfläche der Dekorblende zu gewährleisten und eine betriebliche Beschädigung des Dekors zu vermeiden, sieht die Erfindung vor, dass die Dekorfunktions-Schicht (2) auf der betrieblichen Rückseite des Trägers (1) ausgebildet und hierüber die metallische Schicht (3) aufgebracht ist.

## Beschreibung

Die Erfindung bezieht sich auf eine Dekorblende mit metallischer Anmutung, bestehend aus einem zumindest transluzenten Träger, der eine metallische Schicht und eine Dekorfunktions-Schicht aufweist.

Dekorblenden der vorgenannten Art finden typischerweise im Haushaltsbereich Anwendung, sei es als Bedienblende oder Frontscheibe für ein Haushaltsgerät wie Kochfeld, Backofen, Waschmaschine etc. oder sei es als dekorative Blende eines Möbels. Da das Design dieser Gegenstände des Haushaltsbereiches starken modischen Strömungen unterworfen ist, wirkt sich dies auch auf die Gestaltung der zugehörigen Dekorblenden aus.

Derzeit verlangt der Markt u. a. Dekorblenden mit metallischer Anmutung.

Gemäß dem Stand der Technik werden derartige Metalleffekte auf dekorativen Blenden sowie Gerätefronten durch Aufbringen von mehr oder weniger dicken Metallfolien oder -blechen erreicht. So zeigt die EP 1 178 263 A2 eine Tür für einen Haushaltsofen, bei der auf einer die Frontscheibe bildenden Grundplatte aus Glas eine Türblende aus Aluminium mit doppelseitigem Klebeband aufgeklebt ist. Auch Blenden aus Edelstahl sind auf dem Markt vorhanden.

Es werden dabei generell Edelstahl- oder Aluminium-Zuschnitte bevorzugt, die über Stanztechnik hergestellt und mittels Verklebung auf die Front- oder Rückseite einer Dekorblende aufgebracht werden. Die Metallteile können eine gerichtete oder ungerichtete Struktur aufweisen.

Der Teile- und Montageaufwand und das Gewicht für ein solches Bauteil ist mit Nachteil sehr hoch. Zudem ist gegenüber der Verwendung von Bauteilen oder Metallverblendung ein erhöhter konstruktiver Aufwand zu betreiben, um z. B. das Mehrgewicht auszugleichen. Außerdem erzeugen die Bleche auf den Dekorblenden Fugen, die einer leichten Reinigung hinderlich sind und haben häufig überstehende Ecken und Kanten, an denen ein Benutzer mit einem Kleidungsstück hängenbleiben kann.

Um diesen Aufwand zu vermeiden und die Dekorblende reinigungsfreundlicher zu gestalten, ist es gemäß der DE 102 21 947 A1 bekannt, den transparenten, aus Glas, Glaskeramik oder Kunststoff bestehenden Träger der Dekorblende auf der betrieblichen Vorderseite mit einer transluzenten Schicht und auf der Rückseite mit einer metallischen Schicht zu versehen.
Die frontseitige transluzente Schicht ist dabei farblich einstellbar und ermöglicht somit eine Anpassung des Metallfarbtons der Dekorblende.

Da die transluzente Schicht vorderseitig angebracht ist, ist die Oberfläche rauer und damit schwerer zu reinigen. Etwaige Strukturen und Muster müssen über die vorderseitige transluzente, typischerweise durch Druck aufgebrachte Schicht dargestellt werden, und führen somit zu unerwünschten "Topographien" in der Vorderseite.

Die DE 101 22 093 A1 beschreibt einen Glas- oder Glaskeramikpanel, dessen Vorderseite erst mit einer keramischen Farbe und dann mit einer Metallbeschichtung belegt wird. Bei einer alternativen Ausführungsform kann die Farbschicht auch auf der Rückseite aufgebracht sein. Auch hier kommt es zu den bereits genannten Rauhigkeiten und Strukturen auf der Vorderseite. Zusätzlich ist die Metallbeschichtung außenliegend und damit nicht gegen mechanische oder chemische Beschädigungen geschützt.

Sowohl gemäß der DE 102 21 947 A1 als auch gemäß letztgenannter Schrift wird die Metallbeschichtung vorzugsweise mit PVD-Verfahren oder durch Vakuum-Sputtering aufgebracht. Vorzugsweise werden dabei die Metalle Cr, Al, Ti und Si verwendet. In beiden Fällen dient die transluzente Schicht dazu, durch Farbgebung und/ oder Strukturen, insbesondere auch Oberflächenstrukturen, sowie durch Aussparungen und Überdeckungen, in Kombination mit der metallischen Schicht, die ebenfalls vorgegebene Strukturen und Aussparungen (Fehlstellen) aufweisen kann, verschieden optische Eindrücke, d. h. letztlich das gewünschte Dekor der Blende zu erzeugen. Diese Schicht wird daher als Dekorfunktions-Schicht bezeichnet.

Die Aufgabe der Erfindung besteht darin, die eingangs bezeichnete Dekorblende mit metallischer Anmutung, bestehend aus einem zumindest transluzenten Träger, der eine metallische Schicht und eine Dekorfunktions-Schicht aufweist, so auszubilden, dass ihre betriebliche Vorderseite glatt bleibt und die Beschichtungen gegen betriebliche Beschädigungen geschützt sind.

Die Lösung dieser Aufgabe gelingt erfindungsgemäß dadurch, dass die Dekorfunktions-Schicht auf der betrieblichen Rückseite des Trägers ausgebildet und hierüber die metallische Schicht aufgebracht ist.

Die Erfindung ermöglicht daher die Schaffung von Dekorblenden mit metallischen Anmutungen, die farblich angepasst und auch mit Mustern und Strukturen versehen werden können ohne dass die frontseitige Oberfläche der Dekorblende beeinträchtigt wird. Alle Beschichtungen sind rückseitig auf dem Träger der Dekorblende ausgebildet, so dass die Vorderseite der Dekorblende glatt bleibt und die Beschichtungen durch den Träger gegen äußere Beschädigungen geschützt sind.

Neben einer verbesserten, und auch längerlebigen optischen Anmutung ist die erfindungsmäßige Dekorblende im hohen Maße reinigungsfreundlich.

Ausgestaltungen der erfindungsgemäßen Dekorblende mit metallischer Anmutung sind in den Unteransprüchen gekennzeichnet sowie ergeben sich auch aus der Figurenbeschreibung.

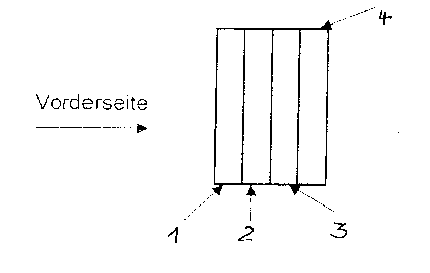

Anhand eines in der Zeichnung in einer einzigen Figur dargestellten Ausführungsbeispieles einer dekorativen Blende mit Metallanmutung wird die Erfindung näher beschrieben. Als Ausführungsbeispiel ist dabei eine dekorative Bedienblende für ein Haushaltsgerät gewählt, von der die Zeichnung eine schematische Querschnitt-Ansicht zeigt.

Die Bedienblende weist auf der betrieblichen Vorderseite einen Träger 1 aus Glas, Glaskeramik oder Kunststoff auf, der typischerweise im sichtbaren Lichtbereich transparent ist, der aber auch im gewissen Maße transluzent sein kann. Auf die Rückseite des Trägers 1 ist eine transparente oder auch transluzente Dekorfunktions-Schicht 2 aufgebracht. Diese Beschichtung basiert vorzugsweise auf einem bekannten organischen oder keramischen Schichtsystem.

Die Dekorfunktions-Schicht 2 ist typischerweise dekoriert, sei es durch eine farblose, strukturierte oder durch eine mit einer organischen oder keramischen Farbe eingefärbte, ggf. auch strukturiert Beschichtung. Die Strukturierung kann auch allein in der Oberfläche ausgebildet sein.

Die Dekorfunktions-Schicht 2 ist vorzugsweise mit einem bekannten Auftragsverfahren, wie Siebdruck oder per Vorhangguß oder auch mittels Tintenstrahl-Laserdruckverfahren oder mittels Transfertechnologie aufgebracht.

Die Dekorfunktions-Schicht 2 kann auch direkt in der Rückseite des Trägers 1 als spezielle, integrale Oberflächenschicht ausgebildet sein. Vorzugsweise wird dabei die Dekorfunktions-Schicht durch Materialabtrag ausgebildet. Als Verfahren kommen hierzu beispielsweise Sandstrahlen, Ätzen, Schleifen in Frage. Es ist hierbei auch möglich, bestimmte Bereiche des Trägers abzuschirmen, z.B. durch Maskieren, so daß in diesen Bereichen keine Oberflächenveränderung in der Rückseite des Trägers erfolgt.

Auf die Dekorfunktions-Schicht 2 ist eine metallische Beschichtung 3 aufgebracht. Diese kann vorzugsweise mit einem PVD-Verfahren oder mittels Magnetron-Sputtering oder anderer bekannter Verfahren aufgebracht werden. Die Metalle der Beschichtung können z. B. aus der Gruppe Cr, Ni, Ti, Au, Ag. Al, Cu, Zn, Zr, Pt stammen.

Außerdem ist es möglich, durch Oxidation der Metallschichten bzw. durch Aufbringen von Metalloxiden, eine breite Palette an metallischen Farbeffekten zu erzielen.

Durch eine entsprechende Ausbildung der Dekorfunktions-Schicht 2 ist es dabei möglich, die von der metallischen Schicht vorgegebene Anmutung in weiten Grenzen optisch zu variieren, um letztlich die vom Kunden gewünschte Dekorblende zu erhalten.

Hinter der metallischen Schicht 3 kann optional eine weitere Farbschicht 4 als optische oder mechanische Abdeckung aufgebracht, vorzugsweise aufgedruckt sein.

Um Symbole für Bedienung und Anzeige an der Dekorblende anzubringen weisen die Schichten 2, 3 und 4 fluchtende Aussparungen, auch Fehlstellen genannt, auf (nicht dargestellt). Die durchgehende Aussparung ist dann rückseitig mit einer transparenten Kunststofffolie, die das entsprechende Symbol trägt, abgedeckt.

Die erfindungsgemäße Dekorblende findet vorzugsweise Anwendung als Bedienblende und/oder Frontscheiben-Dekor für ein Haushaltsgerät wie Kochfeld, sei es strahlungs-, induktions- oder gasbeheizt, Backofen, Mikrowellengerät, Waschmaschine, etc., oder als Plattendekor einer Kochfläche, aber auch als dekorative Blenden bei Möbeln.

## Patentansprüche

1. Dekorblende mit metallischer Anmutung, bestehend aus einem zumindest transluzenten Träger, der eine metallische Schicht und eine Dekorfunktions-Schicht aufweist, **dadurch gekennzeichnet, dass** die Dekorfunktions-Schicht (2) auf der betrieblichen Rückseite des Trägers (1) ausgebildet und hierüber die metallische Schicht (3) aufgebracht ist.

2. Dekorblende nach Anspruch 1, **dadurch gekennzeichnet, dass** die Dekorfunktions-Schicht (2) direkt in der Rückseite des Trägers ausgebildet ist.

3. Dekorblende nach Anspruch 2, **dadurch gekennzeichnet, dass** die Dekorfunktions-Schicht durch Materialabtrag in der Rückseite des Trägers ausgebildet ist.

4. Dekorblende nach Anspruch 1, **dadurch gekennzeichnet, dass** die Dekorfunktions-Schicht (2) als separate Schicht direkt auf der Rückseite des Trägers (1) aufgebracht ist.

5. Dekorblende nach Anspruch 4, **dadurch gekennzeichnet, dass** die Dekorfunktions-Schicht (2) auf einem organischen oder keramischen Schichtsystem basiert.

6. Dekorblende nach einem der Ansprüche 1 bis 5, **dadurch gekennzeichnet, dass** die Dekorfunktions-Schicht (2) farblos ist.

7. Dekorblende nach einem der Ansprüche 1 bis 5, **dadurch gekennzeichnet, daß** die Dekorfunktions-Schicht (2) eingefärbt ist.

8. Dekorblende nach einem der Ansprüche 1 bis 7, **dadurch gekennzeichnet, daß** die Dekorfunktions-Schicht (2) gemustert oder strukturiert ist.

9. Dekorblende nach einem der Ansprüche 1 bis 8, **dadurch gekennzeichnet, daß** die metallische Schicht (3) Metalle aus der Gruppe Cr, Ni, Ti, Au, Ag, Al, Cu, Zn, Zr, Pt oder Oxide davon enthält.

10. Dekorblende nach Anspruch 9, **dadurch gekennzeichnet, dass** die metallische Schicht (3) aufgesputtert ist.

11. Dekorblende nach einem der Ansprüche 1 bis 10, **dadurch gekennzeichnet, dass** die metallische Schicht (3) partiell unbeschichtete Bereiche (Fehlstellen) aufweist.

12. Dekorblende nach einem der Ansprüche 1 bis 11, **dadurch gekennzeichnet, dass** auf die metallische Schicht eine Farbschicht (4) als optische und/oder mechanische Abdeckung aufgebracht ist.

13. Dekorblende nach einem der Ansprüche 1 bis 12, ausgebildet als Bedienblende.
